# EUROPEAN PATENT APPLICATION

(11) **EP 4 684 856 A1**
(43) Date of publication of application: **28.01.2026**
(21) Application number: 24202835.5
(22) Date of filing: 26.09.2024
(51) Int. Cl.: B01D 19/00, H01M 4/04, B05C 5/02, H01M 10/052, H01M 50/403

(54) **APPARATUS FOR REMOVING PROGRESSIVE AIR BUBBLES IN SLURRY WHEN COATING SECONDARY BATTERY**

(30) Priority: 22.07.2024 KR 20240096689
(71) Applicant: Kim, Sung Yong, Jincheon-gun Chungcheongbuk-do 27868 (KR)
(72) Inventor: KIM, Sung Yong, 27868 Jincheon-gun (KR); LEE, Myoung Hun, 28805 Chungcheongbuk-do (KR)
(74) Representative: Twelmeier Mommer & Partner

(57) **Abstract**

The present disclosure relates to an apparatus for preventing the inflow of foreign substances such as air bubbles, fine particles, and air pockets, of various sizes, when coating a secondary battery coating slurry, and more particularly, to an apparatus for removing foreign substances, such as air bubbles in a supplied slurry, by discharging the foreign substances including progressive air bubbles in various forms and with various apparatuses from a location where the air bubbles are collected when supplying a secondary battery coating slurry.

## Description

### cross-reference to related applications

This application claims the priority of Korean Patent Application No. 10-2024-0096689 filed on July 22, 2024, in the Korean Intellectual Property Office, the disclosure of which is incorporated herein by reference.

### BACKGROUND

### Field

The present disclosure relates to an apparatus for preventing the inflow of foreign substances such as air bubbles, fine particles, and air pockets, of various sizes, when coating a secondary battery coating slurry, and more particularly, to an apparatus for removing foreign substances, such as air bubbles in a supplied slurry, by discharging the foreign substances including progressive air bubbles in various forms and with various apparatuses from a location where the air bubbles are collected when supplying a secondary battery coating slurry.

### Description of the Related Art

In the modern era where electronic technology is rapidly developing, the activation and widespread adoption of electric vehicles as well as the high interest in energy storage technology have expanded application fields of secondary batteries to medium and large batteries in addition to conventional batteries used in common devices such as mobile phones, camcorders, and laptops.

However, in addition to batteries used in general electronic devices, the demand for high energy density naturally follows in medium and large batteries used as power supplies for electric vehicles, and lithium secondary batteries have been developed and commercialized to meet the demand.

The secondary batteries are made into electrode assemblies that include separators between positive and negative electrodes after coating and drying the positive and negative electrodes through several manufacturing processes, inserted into battery cases in various shapes, and then perform a charge/discharge step that activates the electrode assemblies through multiple charge/discharge cycles.

Examples of three major factors that cause negative and positive electrode surface peeling and pinhole phenomenon, which are electrode defects, during the process of checking the electrode quality through the charge/discharge include progressive large particles, progressive air bubbles, and foreign substances such as oil, which cause problems in secondary battery electrode products.

It is necessary to remove the progressive air bubbles in the slurry when coating the secondary battery, which is one of the three major factors, which may lead to battery fires in secondary battery electrode products.

The progressive air bubbles may be generated in pipe connection fittings such as in a pump, a supply pipe, an elbow, tee, that mix a coating slurry and supply the coating slurry in the electrode production coating process. The air bubbles may be generated during the slurry mixing process and the progressive air bubbles, etc., may be generated due to the pump cavitation phenomenon that supplies the slurry. In addition, due to the characteristics of the supply and manufacture of the coating slurry, all insides of piping lines for each electrode production batch are cleaned and then the coating slurry is supplied, so all air in an empty space inside the pipe should be discharged. During this process, the air bubbles and the air pockets are generated inside a fitting, a filter, or a storage tank and thus fine air bubbles and air pockets at corners of pipe fittings or accessories are supplied in very small quantities together with the slurry, which often causes defects in the electrode coating process.

These air bubbles may lead to performance degradation and fire due to electrode peeling and pinholes, resulting in significant damage to both manufacturers and consumers.

Accordingly, in order to improve the quality of the electrode, it is essential to remove the air bubbles, etc., that are generated in the coating slurry. Depending on whether the air bubbles are removed, the production yield and quality of the secondary batteries will be greatly affected.

Due to the above-described necessity, efforts and studies have been made to remove foreign substances, etc., such as the air bubbles in the slurry used in battery manufacturing.

As an example of the above-described related art, Korean Patent No. 10-2254336 (registered on May 14, 2021) discloses a method of manufacturing an electrode slurry for a secondary battery that includes a process of defoaming at atmospheric pressure, including a process of mixing raw materials of an electrode slurry and then storing and transporting the mixed electrode slurry, a process of centrifuging the electrode slurry at atmospheric pressure to remove air bubbles in the electrode slurry as a gaseous component and then transferring the defoamed electrode slurry to a coater die, and then a process of circulating the electrode slurry remaining in the coating process from the coater die to the centrifugation.

However, the registered patent uses a deaerator including a cylindrical chamber, a raw material supply unit, a rotating unit, a slurry discharge unit, and a gas discharge unit for defoaming. However, since the rotating unit should have a separate rotating means, the registered patent has problems such as economic burden and complexity of an apparatus.

Meanwhile, Korean Patent Laid-Open Publication No. 10-2023-0143049 (Published on October 11, 2023) discloses a method of manufacturing an electrode slurry that includes a process of manufacturing a mixture in which raw materials are mixed inside a mixer, a process of counting air bubbles while transferring the mixture to a storage tank, a process of transferring the mixture from the storage tank to the mixer if a count value of the air bubbles is greater than a reference value, and a process of removing the air bubbles inside the mixer, other apparatuses, and an electrode for a secondary battery.

The above-described public patent has the problem that it is complicated because the bubbles in the slurry should be counted, separate equipment is required for the counting, and a mixer should be operated, and it takes a lot of time to remove fine air bubbles in the slurry.

### [Related Art Document]

### [Patent Document]

(Patent Document 1) Korean Patent No. 10-2254336 (2021.05.14)
(Patent Document 2) Korean Patent Laid-Open Publication No. 10-2023-0143049 (2023.10.11)

### SUMMARY

An object to be achieved by the present disclosure is to separate and discharge air bubbles and progressive air bubbles generated at an upper portion of any type or apparatus (hereinafter referred to as "collection apparatus") which includes a filter that collects air bubbles, such as progressive air bubbles, large particles, and oils (hereinafter referred to as "air bubbles") in a slurry when supplying the slurry for manufacture of secondary batteries, and unlike the related arts, provide an apparatus for removing air bubbles that can induce air bubbles upward due to a retention speed of a generally used collection apparatus without having a separate power source and discharge the induced air bubbles to the outside, and at the same time, an apparatus for removing air bubbles including a technology that can open an upper vent hole in emergency, such as when a pressure inside a filter suddenly increases in an electrode process emergency or when the apparatus for removing air bubbles does not operate.

According to an aspect of the present disclosure, there is provided an apparatus for removing air bubbles in which air bubbles in a slurry generated in manufacture of a secondary battery are collected at an upper portion of a filter due to retention in a collection apparatus when the slurry is supplied, and a certain amount of the collected air bubbles (the amount that is not discharged during electrode production) are periodically discharged to the outside and removed, the apparatus including: an air bubble discharge unit that includes a plurality of air bubble discharge holes formed therein to discharge air bubbles, preventing the discharge holes from being blocked by progressive large particles or various foreign substances and an air bubble vent hole that opens and closes an upper air bubble discharge hole according to a specific gravity to discharge only the collected air bubbles, an upper emergency valve that forcibly lowers the air bubble vent hole to urgently discharge the pressure due to a sudden increase in pressure of unknown cause during electrode coating production when the air bubble vent hole is closed, and a stopper that maintains a correct position so that the emergency valve does not interfere with the vent hole.

In addition, the apparatus for removing air bubbles may include an air bubble removal body part that is composed of a fastening part that includes a lower fastening part that is fitted into an upper nozzle of the collection apparatus and is accommodated at an upper portion and is fastened to a location where air bubbles are collected at a lower portion, and an upper fastening part that is fastened to an air bubble removal body of an air bubble removal body part.

According to the present disclosure, it is possible to provide the apparatus for removing air bubbles that can discharge the air bubbles only by the force of the slurry inflow, making it economical as it does not require any additional components or apparatuses., can ensure stability by preventing the external dispersion, etc., of the slurry using the balls with a specific gravity of 1 or less to prevent potential risks in advance, use the stopper to control the pressure of the slurry inflowing during the filtering and the pressure of the discharged slurry, enabling the stable slurry supply with effective electrode coating while removing the progressive air bubbles, and reduce labor consumption compared to conventional methods, making it economical and removing the air bubbles collected in the slurry when coating the secondary battery.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a diagram illustrating a general process of manufacturing a secondary battery and a fixed filter position;
FIG. 2 is a schematic diagram of an apparatus for removing air bubbles of the present disclosure;
FIG. 3 is an exploded perspective view of FIG. 2;
FIG. 3A is a cross-sectional view taken along line A in FIG. 3; and
FIG. 3B is a cross-sectional view taken along line B in FIG. 3.

### DETAILED DESCRIPTION OF THE EMBODIMENT

Hereinafter, the present disclosure will be described in more detail with reference to the accompanying drawings.

The following description is intended to help understanding and practice of the present disclosure, and the present disclosure is not limited thereto.

Those skilled in the art will understand that various modifications, changes, or alterations can be made within the scope of the invention as set forth in the claims below.

First, in order to understand the reason for using the present disclosure in the manufacture of secondary batteries or its necessity, before describing the present disclosure in detail, a process from manufacture of slurry to coating in manufacture of secondary batteries will be briefly described.

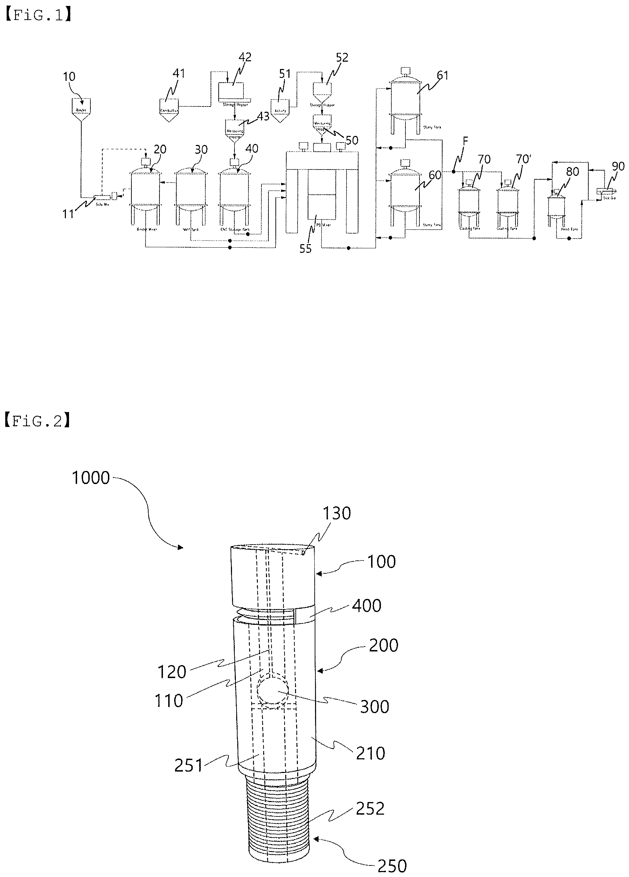

FIG. 1 is a schematic diagram illustrating locations (.) of various collection apparatuses for removing foreign substances in a process of making slurry and coating electrodes as an example of a process of manufacturing a commonly used secondary battery.

In addition to the description of FIG. 1 above, it is to be noted that detailed descriptions of known components that can be easily understood by those with ordinary knowledge in the field to which the technology of the present disclosure belongs will be omitted in the description of the present disclosure.

The known components include components of slurry used in the manufacture of the secondary battery, the configurations of a common filter or collection apparatus used to discharge gas in the slurry among the secondary battery technologies, and the like.

Schematically describing the process of manufacturing the secondary battery illustrated as an example in FIG. 1, in a process in which a binder 10 prepared in FIG. 1 is continuously mixed through a solution mixer supply pump, Solumix 11, and is transferred to a PD mixer 55, a foreign substance removal filter is included.

In the above, an arrow from the binder 10 to the right indicates forward progress.

In a binder mixer 20 of FIG. 1, the dotted arrow (opposite of the forward direction) toward the Solumix 11 side below the binder 10 indicates a less mixed mixing line in the binder mixer 20.

Necessary materials such as a solvent are stored in an NMP tank 30 and transferred to the PD mixer 55, at the same time, and when necessary, are transferred to the binder mixer 20 and a pre-dispersion mixer (not illustrated).

A conductive 41, which is a conductive material storage tank required for the manufacturing of the secondary battery, is measured from a weighing hopper 43 through a storage hopper 42, transferred to the conductive storage tank 40, and then supplied through a foreign substance removal filter F when transferred to the PD mixer 55.

In addition, a storage tank 51 for an activation material, which is another material, passes through the weighing hopper 50 through the storage hopper 52 and then is transferred to the PD mixer 55.

As described above, in the PD mixer 55, the raw materials collected in the PD mixer 55 are mixed to manufacture a slurry for the secondary battery, and the manufactured slurry is transferred into a slurry storage tank 61 or a slurry tank 60, and then air bubbles, foreign substances, and metals are removed through the foreign substance removal filter in a slurry circulation method and then return to coating slurry storage tanks 70 and 70' .

In the above, when there are the air bubbles, the foreign substances, and the metals in the slurry in the slurry storage tanks 60 and 61, the circulation process through the mesh filter F and the magnetic filter is repeated, and when the slurry dispersion is complete, the slurry is transferred to the coating storage tanks 70 and 70' and supplied through the foreign substance removal filter F.

Of course, the filter F may also be installed in each supply pipe, etc.

The slurry transferred to the coating storage tanks 70 and 70' passes through a head tank 80, passes through the coating supply pump and foreign substance removal filter F, is coated with electrodes at a die 90, and then dried to produce negative and positive electrode rolls of the secondary battery, which are then transferred to other processes.

The process is an example and may be performed in other methods, but in all methods, a filter F is typically used to perform filtering and remove foreign substances such as gas.

The filtering and collecting of air bubbles may be performed using various types of apparatuses, etc., including the filter F.

When there are air bubbles in the slurry passing through the head tank 80 and the die 90, gas is continuously removed through reverse circulation as illustrated in the drawing, but air pockets in pipe elbows, valves, and fittings, and fine air bubbles in the slurry pose a risk of progress.

A circle indicated by a black dot in FIG. 1 represents a collection apparatus, which is the filter F used to remove foreign substances and metals in the general process of manufacturing a secondary battery.

Due to the residence time of the slurry in this collection apparatus, the slurry fine air bubbles and the air bubbles generated by the pump cavitation phenomenon and the air pockets are collected in the upper portion of the filter, and the collected air bubbles are supplied through the pipe together with the slurry.

In the above, when opening a cap at the upper portion of the apparatus to remove the gas in the slurry using the general collection apparatus and removing the air bubbles, there is a problem that a worker should wait while the air bubbles are removed, and there is a risk that the slurry inside may be ejected through the open hole when removing the foreign substances.

When operating for a long time, there are also cases where the worker is absent, and in such a situation, the air bubbles in the slurry are not properly discharged, so the air bubbles are transferred together with the slurry, which may cause defects in the electrode production, resulting in performance degradation and fire during the use of the secondary battery electrode battery in the future.

Therefore, the removal of the air bubbles, which are the foreign substances in the slurry supplied in the manufacture of the secondary battery, is important and absolutely necessary. However, when the slurry supplied to the foreign substance removal filter F and the slurry discharged after the air bubbles are removed after being filtered are continuously coated, the internal pressure of the foreign substance removal filter F may change due to the progressive large particles, which may adversely affect the quality of the electrode coating due to the change in the coating density in the direction of progression during the electrode coating.

A method of avoiding the above-described adverse effects on the quality of products may be a method of maintaining the pressure inside the foreign substance removal filter F constant so that the supply pressure at which the slurry flows into the foreign substance removal filter F and the supply pressure at which the slurry is filtered and supplied to the die 90 are constant.

The present inventors have completed the present disclosure based on the judgment that, in the normal process of manufacturing secondary batteries, instead of the normal upper cap of the filter and collection apparatus used to discharge foreign substances such as air bubbles in slurry to the outside, when the air bubbles that are discharged when filtering the inflowing slurry in the filter and move upward due to the retention time (the normal method also discharges the air bubbles using this) may be naturally guided through the guide hole and discharged upward, it may replace the upper cap of the filter normally used, and when the slurry is prevented from being discharged to the outside by a separate element using the rising air bubbles, it will be possible to solve the problems with the filter and collection apparatus normally used.

FIG. 2 is a schematic diagram of an apparatus 1000 for removing air bubbles of the present disclosure.

In FIG. 2, the apparatus 1000 for removing air bubbles includes an air bubbles discharge unit 100 that is positioned at the upper side and discharges the air bubbles, and an air bubbles removal main body part 200 that is fitted with the air bubbles discharge unit 100 and may accommodate and control the air bubbles discharge unit 100.

The air bubbles discharge part 100 includes an air bubble discharge hole 120 that extends downward from the upper side and is formed therein and an air bubble discharge pipe 110 formed so that the air bubble discharge hole 120 is not blocked while forcibly lowering an air bubble removal ball 300 for discharging air bubbles in the event of an emergency to be described below, and the upper portion of the air bubble discharge hole 120 is connected to an air bubbles safety discharge vent hole 130, which communicates with at least both sides to prevent risks during the upper discharge operation when slurry is discharged due to malfunction and the air bubble discharge hole 120 and the air bubble vent hole 130 are connected to the outside.

In addition, the air bubble removal body part 200 includes an air bubble removal body 210 and a fastening part 250, where an upper fastening part 251 of the fastening part 250 is fastened to the lower side of the air bubble removal body 210 and the lower fastening part 252 is fastened to the foreign substance removal filter F.

The air bubble removal ball 300 is installed between the upper fastening part 251 of the air bubble removal body 210 and the air bubble discharge pipe 110 of the air bubble discharge part 100, so the apparatus 1000 for removing air bubbles discharges only air bubbles using specific gravity, when slurry with viscosity inflows, the air bubbles removal ball 300 moves upward to close the air bubble discharge hole 120 in the air bubble discharge pipe 110, so the slurry is not discharged, when the air bubbles are collected upward due to the retention time of the slurry supply to the foreign substance removal filter F or the collection apparatus, the air bubbles are collected to the lower portion of the air bubble removal ball 300 through the lower fastening part 252, and when the specific gravity is lower, the air bubble removal ball 300 is lowered, so only the collected air bubbles are discharged to the outside through the air bubbles discharge part 100.

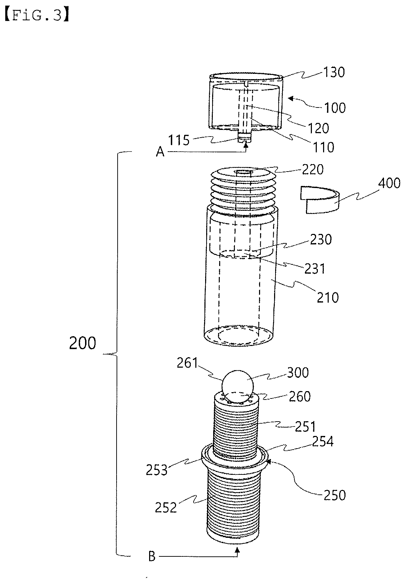

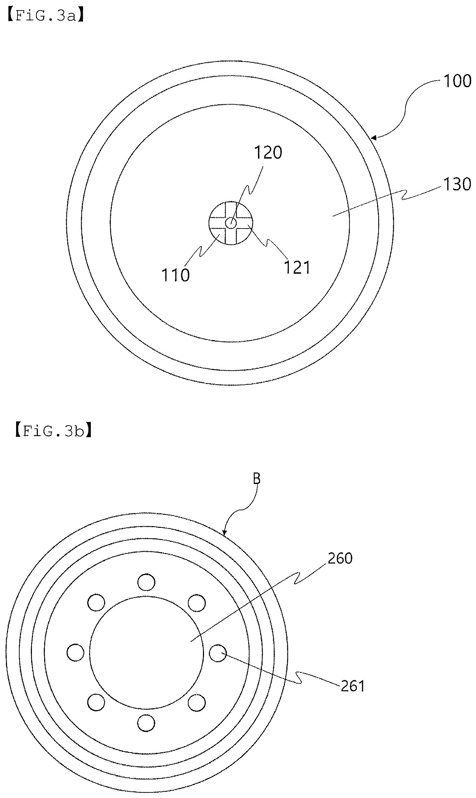

FIG. 3 is a detailed view of FIG. 2, and is a perspective view of the state before a state in which the apparatus 1000 for removing air bubbles of the present disclosure is combined.

In FIG. 3, the air bubble discharge unit 100 includes the air bubble discharge pipe 110 extending downward from the upper side as described above, and the air bubble discharge hole 120 for discharging air bubbles is formed inside the air bubble discharge pipe 110.

The air bubble vent hole 130 communicating with the air bubble discharge hole 120 is formed on at least both sides of the upper side of the air bubble discharge hole 120, so that the air bubbles rising from the lower side are discharged upward through the air bubble discharge hole 120 of the air bubble discharge pipe 110, and the air bubbles are discharged to the outside through the air bubble vent hole 130 that communicates with the air bubble discharge hole 120.

It is preferable that at least two air bubble vent holes 130 are formed so as to communicate with the air bubble discharge hole 120, which is for smooth discharge of air bubbles.

In addition, an O-ring 115 may be provided on the lower side of the air bubble discharge pipe 110 so that the air bubble discharge pipe 110 may be fitted more effectively and completely when fitted to an opening 220 of the air bubble removal body part 200.

In addition, it is preferable to form at least two concave portions 121 centered on the air bubble discharge hole 120 as illustrated in FIG. 4A indicated by guide line A at the lower portion of the air bubble discharge pipe 110. When the entire apparatus 1000 for removing air bubbles of the present disclosure is combined, a situation occurs in which the air bubble removal ball 300 may come into contact with the air bubble discharge pipe 110. In this case, since the air bubble removal ball 300 may get stuck in the air bubble discharge hole 120 of the air bubble discharge pipe 110, it is preferable to form two or more concave portions 121 to prevent the air bubble removal ball 300 from getting stuck.

The air bubble removal body part 200 in FIG. 3 will be described in more detail.

The air bubble removal body part 200 has an opening 220 formed on the upper side of the air bubble removal body 210 to accommodate the air bubble discharge unit 100.

The opening 220 is sized to perfectly accommodate the air bubble discharge pipe 110 of the air bubble discharge unit 100. In this case, the air bubble discharge unit 100 is perfectly accommodated in the opening 220 of the air bubble removal body part 200 through the O-ring 115 fitted in the lower portion of the air bubble discharge pipe 110, and the air bubble discharge unit 100 is properly accommodated and fastened through the upper fastening part 251 in the fastening part 250.

An O-ring 230 is provided on the vent hole side where the end of the air bubble discharge pipe 110 accommodated in the upper portion of the air bubble removal body 210 of the air bubble removal body part 200 meets to form a ball seating part 231, and the air bubble removal ball 300 is accommodated in the air bubble removal body 210.

Therefore, the air bubble removal ball 300 is accommodated and positioned between the end of the upper fastening part 251 of the fastening part 250 of the air bubble removal body part 200 and the end of the air bubble discharge pipe 110.

The fastening part 250 may be divided into an upper fastening part 251 that is fastened to the lower portion of the air bubble removal body 210, and a lower fastening part 252 that is fastened to the foreign substance removal filter F or the collection apparatus. A protrusion 253 is formed between the upper fastening part 251 and the lower fastening part 252, so that the outside of the protrusion 253 and the air bubble removal body 210 form a straight line when fastening. An O-ring 254 is provided on the inside of the protrusion 253, so the fastening between the fastening part 250 and the air bubble removal body 210 may be more stable.

The fastening part 250 is provided with an air bubble guide hole 260 that penetrates through the upper and lower fastening parts 251 and 252, and a fine guide hole 261 is formed around the air bubble guide hole 260 (see FIG. 3B).

The fine guide hole 261 is formed in a shape that does not directly contact the air bubble removal ball 300, so the air bubble removal ball 300 may block the air bubble guide hole 260, thereby forming a vacuum, and therefore, serves an auxiliary role in guiding the air bubbles upward inside while preventing the vacuum.

The air bubble removal ball 300 uses a specific gravity lower than 1, and therefore, may easily move up and down within the ball mounting portion 231 according to the air bubbles coming from the foreign substance removal filter F or the collection apparatus.

In addition, a stopper 400 in FIGS. 2 and 3 is used to ensure that the air bubble discharge unit 100 and the air bubble removal body 210 are not tightly fastened when the air bubble discharge unit 100 is fitted to the air bubble removal body 210, but are fastened to a certain width to control the pressure, thereby making the inflow and outflow pressure constant, and it is used to enable the air bubble discharge unit 100 to be tightly or slightly loosely tightened through the stopper 400.

Therefore, the air bubble discharge unit 100 and the air bubble removal body 210 may be made of elastic materials.

In addition, in order to discharge internal pressure when the pressure inside the foreign substance removal filter F or the collection apparatus suddenly increases during the electrode coating, the stopper 400 is removed, the air bubble discharge unit 100 is closed, and the air bubble removal ball 300 blocking the air bubble discharge hole 120 is forced to be lowered, thereby controlling the rising pressure.

Therefore, the apparatus 1000 for removing air bubbles of the present disclosure, which is configured and operated as described above, may be used by being combined and mounted on the upper portion of the foreign substance removal filter F or the collection apparatus that is commonly used.

According to the present disclosure as described above, instead of the conventional upper cap, the apparatus 1000 for removing air bubbles of the present disclosure is used to discharge the air bubbles collected upward in the foreign substance removal filter F or the collection apparatus to the outside.

As described above, according to the apparatus 1000 for removing air bubbles of the present disclosure, when the slurry flows into the foreign substance removal filter F or the collection apparatus and is filtered and then discharged through a slurry outlet, the air bubbles in the slurry separated from the slurry move upward along the air bubble guide hole 260 and the fine guide hole 261 formed in the fastening part 250 of FIG. 2, and rise along the air bubble discharge hole 120 formed in the air bubble discharge pipe 110 of the air bubble discharge unit 100 fitted to the opening 220 formed in the upper portion of the air bubble removal main body 210 through the air bubble removal ball 300 and are discharged to the outside through the air bubble vent hole 130.

Typically, the slurry inflowing through the slurry inlet of the foreign substance removal filter F and the collection apparatus is filtered and discharged through the slurry outlet, and the fine air bubbles collected at this time are discharged through the upper cap.

When the inflowing slurry is filled, the air bubble removal ball 300 has a specific gravity lower than 1, and thus easily rises toward the air bubble discharge pipe 110 of the air bubble discharge unit 100 (dotted line 300 in FIG. 2), so there is no concern about the slurry flowing out, and the rising air bubbles rise along the air bubble discharge hole 120 formed inside the concave portion 121 of the air bubble discharge pipe 110 and pass through the air bubble vent hole 130, so even if the slurry flows in and the air bubble removal ball 300 rises, there is no problem at all with the discharge of the air bubbles.

In addition, the air bubble discharge unit 100 of the apparatus 1000 for removing air bubbles of the present disclosure may further include the stopper 400, so that the pressure between the slurry inlet and the slurry outlet may be precisely adjusted by controlling the bonding strength between the air bubble discharge unit 100 and the air bubble removal body part 200, and by controlling the shape of the lower fastening part 252 of the fastening part 250, it may be applied to any filter.

In addition, the apparatus 1000 for removing air bubbles of the present disclosure may remove air bubbles only with the force of the supplied slurry during the electrode coating, so it will be an effective product that does not require a separate unnecessary apparatus or equipment to remove the air bubbles in the slurry.

## Claims

1. An apparatus for removing air bubbles collected in a slurry when coating a secondary battery, including:
a gas discharge unit that has an air bubble discharge pipe forming an air bubble discharge hole and an air bubble vent hole communicating with the air bubble discharge hole;
an air bubble removal body part that includes an air bubble removal body having a vent hole formed on the upper side to accommodate and fit the gas discharge pipe and a fastening part having an upper fastening part fitted to the air bubble removal body and a lower fastening part fitted to a filter or a collection apparatus on the lower side; and
an air bubble removal ball that is positioned between the air bubble discharge pipe of the air bubble discharge unit and the upper fastening part of the air bubble removal body part.

2. The apparatus of claim 1, wherein a concave portion is formed around the air bubble discharge hole of the air bubble discharge unit.

3. The apparatus of claim 2, wherein the concave portion is formed on an outside of the air bubble discharge hole.

4. The apparatus of claim 1, wherein an air bubble guide hole is formed extending upward and downward in the fastening part.

5. The apparatus of claim 4, wherein a fine guide hole is formed extending upward and downward around the air bubble guide hole.

6. The apparatus of claim 1, wherein the air bubble removal ball is positioned to be able to move upward and downward.

7. The apparatus of claim 1 or 6, wherein the air bubble removal ball is made to have a specific gravity of 1 or less.

8. The apparatus of claim 1, wherein a stopper is fitted between the air bubble discharge unit and the air bubble removal body.
